# EUROPEAN PATENT APPLICATION

(11) **EP 4 289 692 A1**
(43) Date of publication of application: **13.12.2023**
(21) Application number: 23175365.8
(22) Date of filing: 25.05.2023
(51) Int. Cl.: B60W 30/14, B60L 15/20

(54) **CONTROL SYSTEM FOR ELECTRIC WORK VEHICLE**

(30) Priority: 06.06.2022 JP 2022091902
(71) Applicant: KANZAKI KOKYUKOKI MFG. CO., LTD., Hyogo 661-0981 (JP)
(72) Inventor: ITO, Fumiaki, Hyogo, 661-0981 (JP); ARATA, Masato, Hyogo, 661-0981 (JP)
(74) Representative: Isarpatent

(57) **Abstract**

[Problem] In a control system for an electric work vehicle, when a cruise switch is turned on, a vehicle is shifted more quickly to an operation that reflects a driver's intention.

[Solution] The control system includes a control device that controls a rotation speed of a traveling motor on the basis of an operation position of a travel instruction tool and a cruise switch that instructs execution of a cruise mode in which a rotation speed of the traveling motor is controlled by an ON operation so that a set vehicle speed is stored and that traveling is maintained without an operation of the travel instruction tool. The control device executes the cruise mode when the cruise switch is turned on and a predetermined condition is satisfied, cancels the cruise mode when the cruise switch is turned on but the predetermined condition is not satisfied, and if it is determined that there is no operation of the travel instruction tool after the cancellation of the cruise mode, the rotation speed of the traveling motor is stopped.

## Description

### TECHNICAL FIELD

The present invention relates to a control system for electric work vehicles.

### BACKGROUND ART

A work vehicle including a work implement has been known. For example, a lawn mowing vehicle (work vehicle) including a lawn mowing device as a work implement which is driven to perform lawn mowing works has been known. In such a work vehicle, an electric work vehicle whose wheels are driven by a traveling motor, which is an electric motor, is also considered.

Patent Document 1 describes an electric mowing vehicle (electric work vehicle) whose traveling mode can be switched between an automatic traveling mode and a manual traveling mode. In this mowing vehicle, when a cruise switch (automatic traveling switch) is operated, an operation position of a vehicle-speed operation tool (traveling instruction tool) is stored in a storage portion as a stored position Fm. When the mowing vehicle is in the cruise mode and a predetermined condition is met, a speed of the mowing vehicle is held constant on the basis of the stored position Fm, if the operation position of the vehicle-speed operation tool is located between a neutral position and the stored position Fm.

### PRIOR ART DOCUMENT

### PATENT DOCUMENT

Patent Document 1: Japanese Patent Application Publication No. 2020-65469 (US publication 2019387670)

### SUMMARY OF INVENTION

### TECHNICAL PROBLEM

In a configuration described in Patent Document 1, when the cruise switch is turned on and the vehicle is in the cruise (automatic traveling) mode, even if a rotation number of a traveling motor is controlled at a rotation number corresponding to the travel instruction tool, in a state where the travel instruction tool is released from a foot of a driver, the cruise mode continues, and the traveling motor is not stopped unless a brake pedal is pressed down largely, and a stop switch is operated. As a result, there is room for improvement from a viewpoint that the driver quickly stops the vehicle as necessary, when the cruise switch is turned on.

In the configuration described in Patent Document 1, when the cruise switch is turned on and the cruise mode is in progress, in order to control the rotation number of the traveling motor in accordance with the operation position of the travel instruction tool, it is necessary to operate the travel instruction tool beyond the operation position range of the travel instruction tool when the cruise switch was operated. As a result, when the vehicle speed is to be adjusted in accordance with an operation of the driver, the speed would increase at a moment when the cruise mode is canceled, and there is a possibility that an instantaneous shift to the adjustment operation cannot be made in some cases. This is remarkable when the vehicle is traveling automatically at a high speed. Thus, there is room for improvement from the viewpoint of quickly shifting the vehicle to an operation that reflects the driver's intention, when the cruise switch is turned on.

An object of the present invention is, in a control system for an electric work vehicle, to shift the vehicle more quickly to an operation that reflects the driver's intention, when the cruise switch is turned on.

### SOLUTION TO PROBLEM

A first control system for an electric work vehicle according to the present invention includes wheels driven by a traveling motor, a travel instruction tool operated to set a vehicle speed of the vehicle from zero to a predetermined value, a travel instruction sensor which detects an operation position of the travel instruction tool, a control device which controls the rotation speed of the traveling motor on the basis of an operation position of the travel instruction tool, and a cruise switch which instructs execution of a cruise mode in which the rotation speed of the traveling motor is controlled by an ON operation so that the set vehicle speed is stored and that traveling is maintained without an operation of the travel instruction tool, in which when the cruise switch is turned on and a predetermined condition is satisfied, the control device executes the cruise mode, while, when the cruise switch is turned on but the predetermined condition is not satisfied, it cancels the cruise mode, and if it is determined that the travel instruction tool is not operated after the cancellation of the cruise mode, the rotation speed of the traveling motor is stopped.

According to the first control system for an electric work vehicle according to the present invention, when the cruise switch is turned on but the predetermined condition is not satisfied, the cruise mode is canceled, and if it is determined that there is no operation of the travel instruction tool after the cancellation of the cruise mode, the rotation speed of the traveling motor is stopped and thus, when the driver releases the travel instruction tool from the driver's foot, the traveling motor can be stopped without the need to depress the brake pedal largely. As a result, when the cruise switch is turned on, the driver can stop the vehicle more quickly when necessary.

In the first control system for the electric work vehicle according to the present invention, the travel instruction tool may be configured to be urged so as to automatically return to a position at which the vehicle speed is set to zero when it is not operated.

According to the above configuration, the driver can stop the vehicle more quickly when necessary.

A second control system for an electric work vehicle according to the present invention includes wheels driven by a traveling motor, a travel instruction tool operated to set a vehicle speed of the vehicle from zero to a predetermined value, a travel instruction sensor which detects an operation position of the travel instruction tool, a control device which controls the rotation speed of the traveling motor on the basis of an operation position of the travel instruction tool, and a cruise switch which instructs execution of a cruise mode in which the rotation speed of the traveling motor is controlled by an ON operation so that the set vehicle speed is stored and that traveling is maintained without an operation of the travel instruction tool, in which if it is determined that the cruise switch is turned on and there is no operation of the travel instruction tool, the control device executes the cruise mode, and if it is determined that the cruise switch is turned on but there is an operation of the travel instruction tool exceeding a zero value, it cancels the cruise mode.

According to the second control system for an electric work vehicle according to the present invention, when the cruise switch is turned on, if it is determined that there is an operation of the travel instruction tool exceeding the zero value, the cruise mode is canceled. As a result, the vehicle can be shifted more quickly to an operation that the driver adjusts the vehicle speed in accordance with the driver's operation when necessary.

In the second control system for an electric work vehicle according to the present invention, the travel instruction tool may be configured to be urged so as to automatically return to a position at which the vehicle speed is set to zero when it is not operated.

According to the above configuration, the vehicle can be shifted more quickly to the operation that the driver adjusts the vehicle speed in accordance with the driver's operation when necessary.

Moreover, in the second control system for an electric work vehicle, the system may be configured to stop the rotation speed of the traveling motor, if it is determined that there is no operation of the travel instruction tool after the cancellation of the cruise mode.

According to the above configuration, when the driver releases the driver's foot or hand from the travel instruction tool, the traveling motor can be stopped without the need to depress the brake pedal largely. As a result, when the cruise switch is turned on, the driver can stop the vehicle more quickly when necessary.

### ADVANTAGEOUS EFFECTS OF INVENTION

According to a control system for an electric work vehicle according to the present invention, when the cruise switch is on, the vehicle can be shifted more quickly to an operation that reflects the driver's intention.

### BRIEF DESCRIPTION OF DRAWINGS

FIG. 1 is a schematic diagram illustrating an electric work vehicle including a control system of an embodiment according to the present invention, viewed from one side in a width direction and partially sectioned;
FIG. 2 is a schematic diagram of an A-A section in FIG. 1;
FIG. 3 is a schematic diagram of a B-B section in FIG. 1;
FIG. 4 is a diagram of an operation switch group on an upper part of a steering column viewed from above in the electric work vehicle shown in FIG. 1;
FIG. 5 is a circuit diagram of the control system mounted on the electric work vehicle in FIG. 1;
FIG. 6 is a diagram corresponding to a front side part of FIG. 1 illustrating a state where a bonnet is opened, and a junction box and a DC-DC converter are taken out;
FIG. 7 is a perspective view illustrating a state immediately before a battery mount, a battery, the junction box, and the DC-DC converter are mounted on the front part of a vehicle-body frame of the electric work vehicle in FIG. 1;
FIG. 8 is a perspective view illustrating a state immediately before an inverter mounting member and the inverter are mounted on an upper side of a power transmission unit of the electric work vehicle in FIG. 1;
FIG. 9 is a flowchart illustrating a travel control method when the cruise switch is turned on in the control system of the embodiment;
FIG. 10 is a diagram illustrating an example of a relationship between a traveling state of the vehicle and an operation ratio corresponding to an operation position of a travel instruction tool, when the vehicle is caused to travel by turning on the cruise switch by using the control system of the embodiment;
FIG. 11 is a flowchart illustrating a travel control method when the cruise switch is turned on in a control system of another example of the embodiment; and
FIG. 12 is a diagram illustrating an example of a relationship between the traveling state of the vehicle and an operation ratio corresponding to an operation position of a travel instruction tool, when the vehicle is caused to travel by turning on the cruise switch by using a control system of another example of the embodiment.

### DESCRIPTION OF EMBODIMENTS

An embodiment of the present invention will be described later in detail with reference to the accompanying drawings. Although a case in which an electric work vehicle is a lawn mowing vehicle will be explained below, the electric work vehicle is not limited to a lawn mowing vehicle but may be any other work vehicles including a work implement that performs one or more of a snow removal work, an excavation work, a civil engineering work, and an agricultural work. Moreover, a case in which a work vehicle has a steering handle as a direction instruction tool and uses an accelerator pedal provided on a front side of a seat as the travel instruction tool will be basically explained below, but this is only an example, and regarding at least an invention related to disposition of a junction box or an inverter, it may be so configured that the present invention is applied to a vehicle having two operation levers, left and right, as the travel instruction tool also serving as a direction instruction portion. In this case, the term travel in the travel instruction tool is used as a meaning excluding turning or steering. Shapes, numbers, disposition relationships of components and the like which will be explained below are only examples for explanation and can be changed as appropriate to comply with specifications of the work vehicle. In the following, the same signs are given to similar elements in all of the drawings, and duplicated explanation will be omitted or simplified.

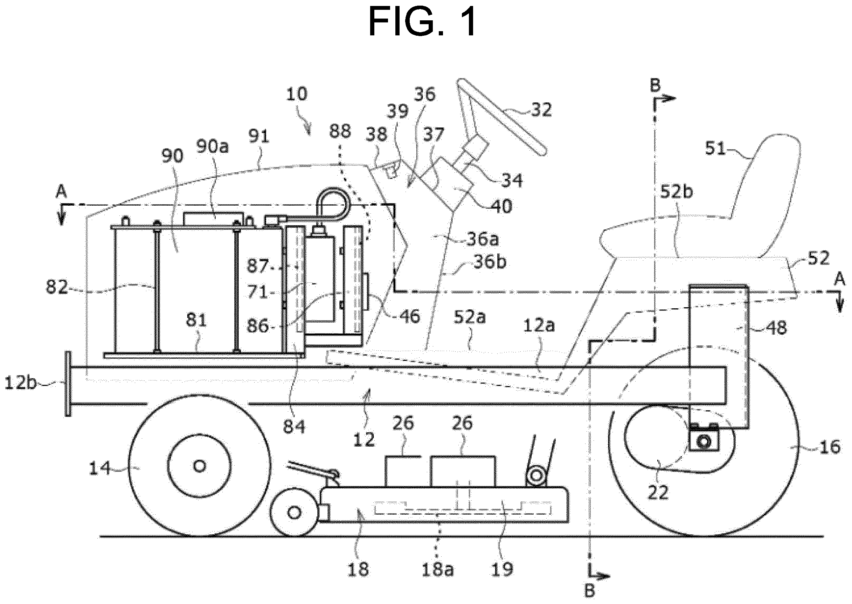

FIGs. 1 to 8 illustrate an embodiment of the present invention. FIG. 1 is a schematic diagram illustrating an electric work vehicle 10 including a control system of an embodiment, viewed from one side in a left-right direction, which is a width direction and partially sectioned.

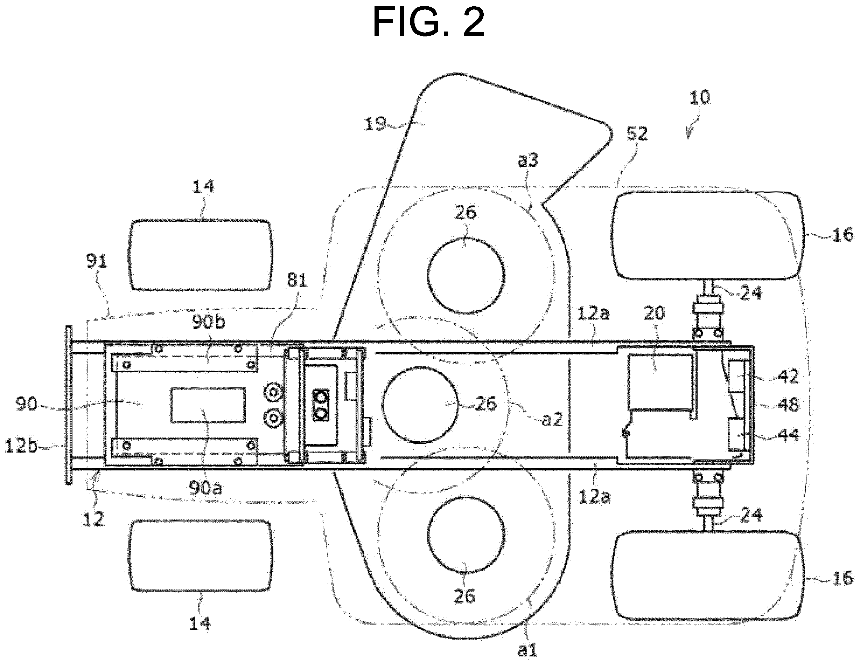

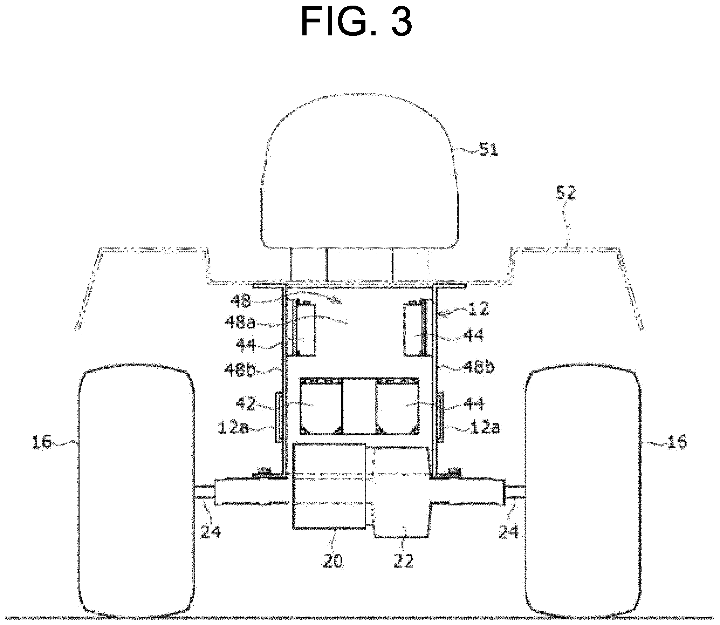

FIG. 2 is a schematic diagram of an A-A section in FIG. 1. FIG. 3 is a schematic diagram of a B-B section in FIG. 1. Hereinafter, the electric work vehicle 10 is referred to as the vehicle 10.

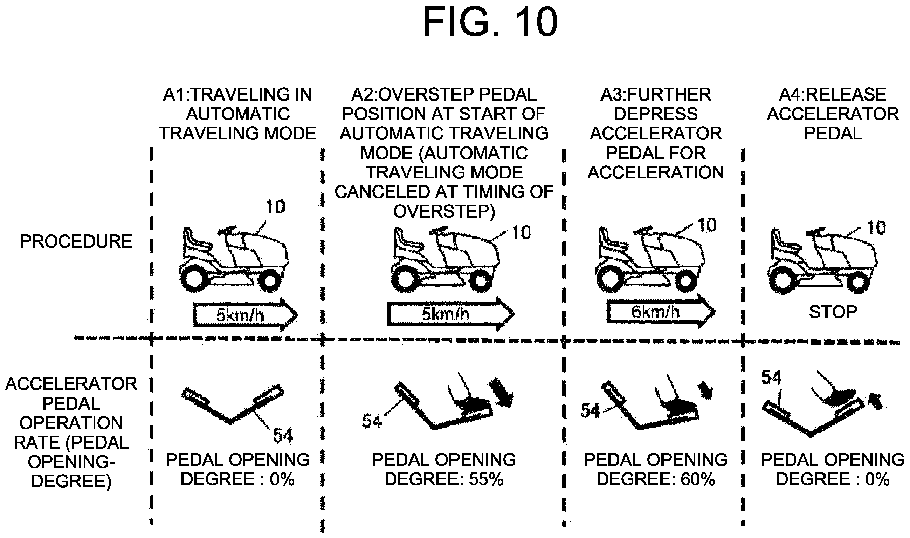

The vehicle 10 is a passenger-type self-propelled lawn mowing vehicle suitable for lawn mowing. The vehicle 10 includes a vehicle-body frame 12, two front wheels 14, left and right, supported on the front side of the vehicle-body frame 12 and two rear wheels 16, left and right, supported on the rear side, a lawn mowing device 18, which is a work implement, a traveling motor 20 (FIG. 2), which drives the rear wheels 16 among the front wheels 14 and the rear wheels 16, three deck motors 26, which are working motors, a steering handle 32, and an accelerator pedal 54 (FIG. 10), which is a travel instruction tool. The vehicle 10 further includes a traveling inverter 42, three deck inverters 44, a control device (ECU) 46, which constitute a control portion 100 and a battery 90. Each of the traveling motor 20 and the deck motor 26 is an electric motor. The traveling inverter 42 corresponds to a first inverter, and the deck inverter 44 corresponds to a second inverter.

The vehicle-body frame 12 is formed of metal such as steel into a beam structure or the like. The vehicle-body frame 12 includes two side frames 12a substantially along a front-back direction of the vehicle body at both left and right ends, a front-end connecting portion 12b that connects front ends of the two side frames 12a, and an inverter mounting member 48 that connects the rear ends. Each of the side frames 12a is formed by including a main-body plate portion along an up-down direction and the front-back direction and two lateral plate portions projecting outward in the left-right direction from both upper and lower end parts of the main-body plate portion, and an opening of the side frame 12a is directed toward a center in the left-right direction of the vehicle. The front-end connecting portion 12b has a plate shape projecting to the front end of the vehicle and extending in the left-right direction and has a function as a bumper. The inverter mounting member 48 will be described in more detail later. On upper sides of the rear end parts of the two side frames 12a, a driver's seat 51, on which the driver as a user is seated, is fixed via the inverter mounting member 48 and a support member 52.

The support member 52 is supported on the upper side of the left and right side frames 12a in the vehicle-body frame 12 and includes a front portion 52a on which the driver onboard the vehicle 10 places the driver's feet and a rear portion 52b that rises upward toward the rear and whose both left and right end parts on the rear side are fender portions covering the upper sides of the two rear wheels 16. That is, on the upper end part of the rear portion 52b of the support member 52, two shoulder portions project upward at intervals on both left and right sides, and the driver's seat 51 is fixed to a portion depressed downward between the two shoulder portions.

On the front side of the driver's seat 51, a steering shaft 34 is rotatably supported by a steering column 36, and a steering handle 32 is fixed to the upper end of the steering shaft 34. The steering shaft 34 steers the two front wheels 14 by pushing and pulling knuckle arms on the two front wheels 14, left and right, by the Ackermann type with rotation thereof.

An accelerator pedal 54 (FIG. 10) is provided on the front right floor of the driver's seat 51. The accelerator pedal 54 is a seesaw type with a substantially V-shaped section that can swing around an axis along the left-right direction of the vehicle. The accelerator pedal 54 indicates that forward travel is instructed by depressing the front side, and the larger a depressing amount becomes, the higher a vehicle speed becomes in the forward travel. On the other hand, the accelerator pedal 54 indicates that backward travel is instructed by depressing the rear side, and the larger the depressing amount becomes, the higher the vehicle speed becomes in the backward travel.

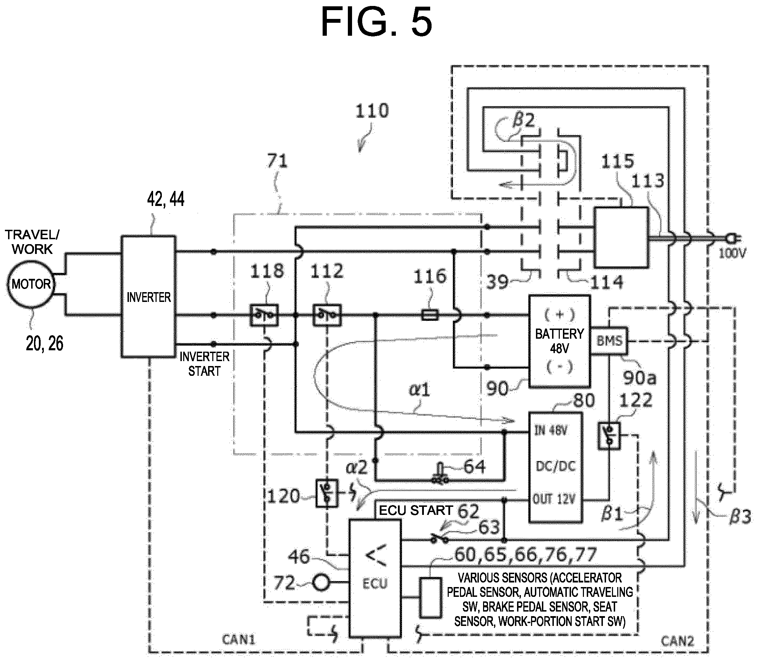

The accelerator pedal 54 is operated to set a moving direction of the vehicle by a depression side and an operation position of the depressing and to set a vehicle speed from zero to a predetermined value. It is configured such that, when the driver releases the driver's foot from the pedal tread, the accelerator pedal is maintained at a vehicle-speed zero position by a return spring, not shown, which is mechanically connected to the accelerator pedal. The depression side and the operation position of the accelerator pedal 54 are detected by the accelerator pedal sensor 60 (FIG. 5). The accelerator pedal sensor 60 corresponds to a traveling instruction sensor. A detection signal of the accelerator pedal sensor 60 is transmitted to the control device 46. The control device 46 controls a rotation direction and a rotation speed of the traveling motor 20 on the basis of the operation side and the operation position of the accelerator pedal 54. For example, if a pedal depression degree, which is the operation ratio of the accelerator pedal 54 corresponding to the pedal position, is 50%, the control device 46 stores 50%. The traveling motor 20 drives the vehicle 10 at 5km/h by the control device 46.

The accelerator pedal is not limited to a seesaw type but can be a two-pedal type with different pedals for a forward travel and a backward travel. Alternatively, the accelerator pedal may be a single pedal common to the forward and backward travels, and the vehicle may be provided with a forward/backward switching operation-tool for instructing switching between the forward and backward travels.

The steering column 36 covers the lower side of the steering shaft 34. Specifically, the steering column 36 includes two side plate portions 36a, left and right, that rise from the upper surface of the front portion 52a of the support member 52, and a rear-end plate portion 36b that connects the rear ends of the two side plate portions 36a and rises from the upper surface of the front portion 52a. The rear-end plate portion 36b is inclined upward to the rear. On the upper end of the rear-end plate portion 36b, a steering panel 37, which is a plate portion having a substantially rectangular shape inclined upward to the front is provided. On the upper end of the steering panel 37, an upper-end plate portion 38 inclined to the lower side as it goes toward the front is provided. On the upper-end plate portion 38, a charging port 39 capable of connecting a charging connector of a charging cable connected to an external power-feed facility is provided. The charging port 39 may be provided anywhere as long as it is in the vicinity of a junction box 71, which will be described later, such as the side plate portion 36a.

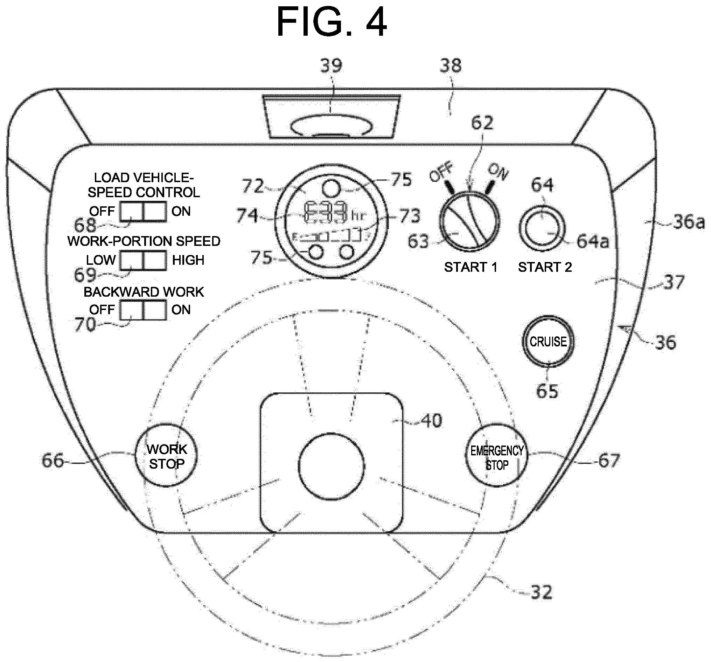

On the steering panel 37, a cylinder portion 40 protruding diagonally upward to the rear side from the center of the lower end part is provided. The upper end part of the steering shaft protrudes from the upper-end plate portion of the cylinder portion 40. On the steering panel 37, an operation switch group 62 (FIG. 4), described later, is provided.

The traveling motor 20, together with a power transmission unit 22, is supported between the left and right rear wheels 16 on the lower side of the rear-end portion of the vehicle-body frame 12. A motor case of the traveling motor 20 is fixed to a unit case of the power transmission unit 22, whereby the power transmission unit 22 and the traveling motor 20 are integrated. In this state, a rotation shaft of the traveling motor 20 is disposed along the left-right direction. The traveling motor 20 is, for example, a 3-phase motor. The power transmission unit 22 includes a reduction gear mechanism and a differential mechanism in the unit case, reduces power of the traveling motor 20 and transmits the power to left and right axles 24 (FIG. 2) connected to the left and right rear wheels 16. The traveling motor 20 and the power transmission unit 22 are disposed under the driver's seat 51. The traveling inverter 42 (FIG. 3), described later, is also disposed under the driver's seat 51. As a result, a front-back weight balance can be improved in a configuration where the battery 90 is mounted on the front side of the vehicle 10.

As shown in FIG. 5, which will be described later, to the traveling motor 20, the battery 90 is connected via the traveling inverter 42 and a main contactor 112 as a main switch installed in the junction box (J/B) 71, and power from the battery 90 is supplied to the traveling motor 20. The main contactor 112 is controlled by the control device 46 described later, whereby it switches electrical connection and disconnection between the battery 90 and the traveling inverter 42 (traveling motor 20). The main switch in the junction box (J/B) 71 may be a relay. As will be explained in more detail later, the battery 90 is fixed to the upper side of the vehicle-body frame 12 in a state covered by the bonnet 91 on the front side of the driver's seat 51.

The control device 46 controls a connection state of the main contactor 112 and the traveling inverter 42. The power of the traveling motor 20 is reduced by the reduction gear mechanism in the power transmission unit 22, and the reduced power is differentially transmitted to the left and right axles 24 by the differential mechanism to drive the left and right rear wheels 16 connected to the left and right axles 24. As a result, the vehicle 10 travels.

The lawn mowing device 18 is supported on the lower side of an intermediate portion in the front-back direction of the vehicle-body frame 12. As a result, the lawn mowing device 18 is disposed between the front wheels 14 and the rear wheels 16 in the front-back direction. The lawn mowing device 18 includes three lawn-mowing blades 18a that are rotary lawn-mowing tools disposed inside a mower deck 19, which is a cover. In FIG. 2, a circular trajectory of movement of a leading end of each of the lawn-mowing blades 18a is indicated by one-dotted chain lines a1, a2, and a3. Upper sides of the lawn-mowing blades 18a are covered by the mower deck 19. Each of the lawn-mowing blades 18a has a plurality of blade elements that rotate around an axis directed in the vertical direction (paper front-rear direction of FIG. 2). As a result, the blade elements rotate and can mow a lawn by cutting the lawn. To each of the three lawn-mowing blades 18a, a corresponding one of the deck motors 26 in the three deck motors 26 is connected. To each of the deck motors 26, the battery 90 is connected via the deck inverter 44 (FIG. 3) for the corresponding deck motor 26, and power is supplied from the battery 90 to the deck motor 26. Each of the deck motors 26 is a 3-phase motor, for example.

The lawn mowing device may be configured to include, as a rotary lawn mowing tool, a lawn mowing reel in which a spiral blade is disposed on a rotation axis parallel to a ground surface, for example, having a function of mowing a lawn or the like, and driven by a deck motor.

FIG. 4 is a diagram of the operation switch group 62 on the upper part of steering column 36 in the vehicle 10, viewed from above the vehicle. FIG. 5 is a circuit diagram of the control system 110 mounted on the vehicle 10. The operation switch group 62 is provided on the steering panel 37 of the steering column 36. The operation switch group 62 has a first start switch 63 and a second start switch 64 used to start the control system 110, a cruise switch 65, a working start switch 66, and an emergency stop switch 67. The first start switch 63 corresponds to an operation switch. The operation switch group 62 further has a load vehicle-speed control switch 68, a working speed select switch 69, and a backward-work permission switch 70. In addition, a circular indicator 72 is provided on an upper part of a center part in the left-right direction of the steering panel 37.

The first start switch 63 has a knob portion and is a two-position switch capable of switching between an ON position and an OFF position by twisting. The second start switch 64 is a push switch that is turned on by being pressed down an operation portion 64a and is turned off by being returned upward by an internal spring force. Since the second start switch 64 does not have a function of self-retaining the ON state, the driver needs to manually keep the operation portion 64a pressed down when the driver wants to maintain the ON state.

When the control system 110 is to be started during traveling, the second start switch 64 is turned on after the first start switch 63 is turned on. On the other hand, when the battery 90 is to be charged from an external charging facility, only the second start switch 64 is turned on and the first start switch 63 is not turned on. As shown in FIG. 5, by turning on the second start switch 64, a voltage of the high-voltage battery 90, which holds a voltage for feeding power to various motors (such as 48 V) is input into the DC-DC converter 80 and is stepped down to the voltage for control signals (such as 12 V), and the control device 46 is started by the output voltage of the DC-DC converter 80. Here, the control device 46 turns on the main contactor connected between the battery 90 and the traveling motor 20, that is, it is closed, when the second start switch 64 is turned on, and the first start switch 63 is in the ON state, and even after the second start switch 64 is turned off, the ON state of the main contactor is maintained. This completes the start of the control device 46 and the inverters 42 and 44, and the battery 90 provided in the vehicle can be only a high-voltage battery such as 48 V, which eliminates the need to provide a low-voltage battery such as 12 V in the bonnet for starting the control device 46 other than the high-voltage battery, and the limited space in the bonnet can be used for increasing a capacity of the battery 90.

The cruise switch 65 is provided to instruct execution of a cruise mode by the turning-on operation. The cruise mode is such a mode that the vehicle speed set at the accelerator pedal position when the cruise switch is turned on is stored, and the rotation speed of the traveling motor 20 is controlled so that the traveling of the vehicle at that vehicle speed is maintained without operating the accelerator pedal. The cruise switch 65 is turned on by pressing of the operation portion. The cruise switch may be configured as a two-position switching type that alternately switches between an ON operation and an OFF operation by repeated pressing, or as a lever type or a rocker type that can switch between the ON operation and the OFF operation. A method of executing the cruise mode by operating the cruise switch 65 will be explained in detail later.

The working start switch 66 is a push-type switch provided to instruct switching between start and stop of the deck motor 26. The working start switch 66 is turned off and locked by pressing-down of the operation portion from the ON state. By twisting the operation portion in a predetermined direction while giving a force in a pressing-down direction from the OFF state, the state is switched to the ON state and is locked. When switching from ON to OFF, there is no need to twist the operation portion, but it is unlocked only by pressing it down, and the operation portion returns to the OFF position by the internal spring force, resulting in the OFF state. As a result, if the lawn mowing device 18 needs to be turned off in an emergency, it can be quickly switched from the ON state to the OFF state only by a simple pressing-down action of the operation portion, which leads to improvement of safety of the vehicle.

The emergency stop switch 67 is provided for emergency stop of both the traveling motor 20 and the deck motor 26 by the pressing-down operation, which is the ON operation. The configuration of the emergency stop switch 67 is similar to that of the working start switch 66, except that the ON position and the OFF position of the emergency stop switch 67 are opposite to the ON position and the OFF position of the working start switch 66. When switching the emergency stop switch 67 from OFF to ON, there is no need to twist the operation portion, but only by tapping it with a first or a palm of the hand and by pressing it down, the power supply to the traveling motor 20 and the deck motor 26 can be quickly shut off so as to stop them, respectively, and unpredictable circumstances can be avoided.

The load vehicle-speed control switch 68 is a rocker-type switch and is provided to switch between an input for the load vehicle-speed control, that is, an execution state and shut-off, that is, a deactivated state. The load vehicle-speed control controls the traveling motor 20 so that the vehicle speed is automatically controlled in accordance with the load of the deck motor 26. For example, if a high load of the deck motor 26 is detected, the traveling motor 20 is controlled to reduce the vehicle speed in accordance with the detected load. On the other hand, if a low load of the deck motor 26 is detected, the traveling motor 20 is controlled to increase the vehicle speed in accordance with the detected load.

The working speed select switch 69 is also a rocker-type switch and is provided to switch the speed of the deck motor 26 in two stages, that is, a predetermined speed on a high speed side and a predetermined speed on a low speed side.

The backward-work permission switch 70 is provided to switch between an input for the backward work permission, that is, permitting the backward work to drive the lawn mowing device 18 while traveling backward and shut-off, that is, prohibiting the backward work. If the prohibition of the backward work is instructed, the control device 46 forcibly stops the drive of the lawn mowing device 18 during the backward travel of the vehicle by switching to the shut-off by operating the backward-work permission switch 70. If the permission of the backward work is instructed, the control device 46 invalidates the forced stop of the lawn mowing device 18 during the backward travel of the vehicle by switching to the input by operating the backward-work permission switch 70. As a result, the driver can perform the work while moving backward in a state where a safe situation is confirmed, whereby work efficiency can be improved.

The indicator 72 has a residual-charge display portion 73 and a cumulative start-time display portion 74. The residual-charge display portion 73 indicates an allowable lower limit and an allowable upper limit of the residual charge of the battery 90 by E and F, respectively, and indicates that the residual charge is proper by lighting display located between E and F. In addition, as the lighting display gets closer to E, the driver can recognize that a traveling distance to insufficient charge is short.

The cumulative start-time display portion 74 displays the cumulative start time of the vehicle after the shipment of the vehicle 10 from a manufacturing factory. On the indicator 72, a plurality of lamps 75 that display the system start or that a traveling action is capable by lighting up are also provided. In FIG. 4, the charging port 39 in a charging start state where an opening is exposed is shown, but in a case other than the charging, the charging port 39 is detachably covered by a lid that can be closed liquid-tightly.

As shown in FIG. 5, the control system 110 includes the aforementioned operation switch group 62, the accelerator pedal sensor 60, the brake pedal sensor 76, and the seat sensor 77. The control system 110 further includes the traveling motor 20 and the traveling inverter 42, the three deck motors 26 and the deck inverter 44, the battery 90, the charging port 39, the DC-DC converter 80, and the control device 46. Into the control device 46, a switching signal or a detection signal is input from the operation switch group 62, the accelerator pedal sensor 60, the brake pedal sensor 76, and the seat sensor 77. The DC-DC converter 80 is connected between the main contactor 112 and the control device 46. The DC-DC converter 80 steps down the voltage input from the battery 90 via the main contactor 112 to 12 V and outputs it to the control device 46 as indicated by arrows α1 and α2 in FIG. 5. In FIG. 5, only the first start switch 63, the second start switch 64, the cruise switch 65, and the working start switch 66 are shown among the operation switch group 62, but switching signals of the other switches in the operation switch group 62 are also input to the control device 46. Moreover, the second start switch 64 is connected between the battery 90 and the DC-DC converter 80. The second start switch 64 inputs the voltage from the battery 90 to the DC-DC converter 80 by the ON operation thereof even in the OFF state of the main contactor 112, and by causing the output voltage of the DC-DC converter 80 to be input into the control device 46, the control device 46 is started by the output voltage.

It may be so configured that the switching signal of the second start switch 64 is not input into the control device 46, and the control device 46 determines from the input signal that the second start switch 64 was operated on or off. In FIG. 5, the traveling inverter 42 as well as the deck inverter 44 and the traveling motor 20 as well as the deck motor 26 are shown as one element, respectively, but actually, the traveling inverter 42 and the three deck inverters 44 are connected in parallel on the power output side of junction box 71, and the traveling motor 20 and the deck motor 26 are connected to the traveling inverter 42 and the deck inverter 44, respectively.

The brake pedal sensor 76 detects that the brake pedal (not shown) disposed on the floor on the front left of the driver's seat 51 was depressed and operated. When a depressing detection signal was input into the control device 46 from the brake pedal sensor 76, the control device 46 cancels the aforementioned cruise mode and feeds power to the traveling motor 20 in a direction for generating a reverse torque. In addition, the brake pedal is mechanically connected via a link mechanism, not shown, so as to move an operating arm (not shown) of the brake device internally provided in the power transmission unit 22 to a brake operation position. Thus, the rotations of the rear wheels 16 are strongly stopped with both electrical and mechanical braking by depressing the brake pedal.

The seat sensor 77 detects that the driver is seated in the driver's seat 51. For example, the control device 46 is configured to include an input of a seating detection signal from the seat sensor 77 as a condition for driving the traveling motor 20 and the deck motor 26.

The traveling inverter 42 drives the traveling motor 20. The traveling inverter 42 has, for example, a traveling inverter circuit including three arms each having two switching elements electrically connected in series, and a traveling-inverter control device that controls the traveling inverter circuit. The traveling inverter 42 converts DC power input from the battery 90 into AC power and outputs it to the traveling motor 20.

An operation of the traveling inverter 42 is controlled by the control device 46. As a result, the traveling motor 20 is controlled by the control device 46 via the traveling inverter 42, and power is supplied to the traveling motor 20 from the battery 90 via the traveling inverter 42. In FIG. 5, bold lines indicate the main contactor 112 and power supply lines with a high voltage such as 48 V via a sub contactor 118 described below, while thin lines indicate signal lines and power supply lines with a low voltage such as 12 V via only the main contactor 112. Although not shown, to the traveling-inverter control device of the traveling inverter 42, a detection value of a rotation number n(sec-1), which is a rotation speed of the traveling motor 20 is input from a motor speed sensor (not shown) provided in the traveling motor 20. The motor speed sensor detects the rotation number of the traveling motor 20. Detection values of the rotation numbers of the motor speed sensor are output to the control device 46.

Each of the deck inverters 44 drives the corresponding deck motor 26. Similarly to the traveling inverter circuit and the traveling-inverter control device of the traveling inverter 42, each of the deck inverters 44 also has a deck inverter circuit and a deck-inverter control device that controls the deck inverter circuit. Each of the deck motors 26 is controlled by the control device 46 via the deck inverter 44, and to the deck motor 26, power is supplied from the battery 90 via the deck inverter 44. Thus, each of the lawn-mowing blades 18a is rotated and driven by the corresponding deck motor 26, and each of the deck motors 26 is driven so as to maintain a predetermined target rotation number set by the working speed select switch 69 described above. The lawn cut by the lawn mowing device 18 is discharged to one side in the left-right direction of the vehicle 10 through a discharge duct provided on the one side in the left-right direction of the mower deck 19.

Furthermore, to the deck-inverter control device of each of the deck inverters 44, a detection value of the rotation number n (sec-1), which is a rotation speed of the deck motor 26, is input from a deck-motor speed sensor (not shown). Each of the deck-motor speed sensors detects the rotation number, which is the rotation speed of the corresponding deck motor 26. A detection value of the rotation number of the deck-motor speed sensor is output to the control device 46 via the corresponding deck inverter 44.

The control device 46 includes a calculation portion such as a CPU and a storage portion such as a memory and is configured of, for example, a microcomputer.

The charging port 39 is connected to the battery 90 via the main contactor 112 in the junction box 71. The charging port 39 can be connected to an external power-feed facility via a charger 115. As a result, in a state where a charging connector 114 of a charging cable 113 connected to an external charging facility is connected to the charging port 39, the battery 90 can be charged from the external charging facility via the main contactor 112. At this time, a battery control device (BMS) 90a is fixed to an upper end of the battery 90, and when the battery control device 90a receives a signal indicating that the charging connector 114 is connected to the charging port 39, the battery control device 90a and the charger 115 provided on the charging cable 113 communicate, and if predetermined charging conditions are met, the battery control device 90a causes the external charging facility to start charging of the battery 90 via the charger 115.

Moreover, the junction box 71 includes a fuse 116 connected between the battery 90 and the main contactor 112 and a sub contactor 118 connected between the main contactor 112 and the inverters 42, 44. When the main contactor 112 is turned on by the system start described above, low-voltage power and signals are supplied to the inverter. As a result, when the control device 46 senses that the inverter was started, the control device 46 turns on the sub contactor 118. Moreover, the control system 110 includes a battery-malfunction response relay 120 and a battery start relay 122. The battery-malfunction response relay 120 is provided in the middle of the signal line that outputs control signals from the control device 46 to the main contactor 112 and is ON when it is normal. On the other hand, when the battery control device 90a detects malfunction of the battery 90, it outputs a battery-malfunction detection signal to the control device 46. When the control device 46 receives that detection signal, it turns off the main contactor 112 by turning off the battery-malfunction response relay 120.

The battery start relay 122 is connected between the battery control device 90a and the output-side terminal of the DC-DC converter 80. In a case where the charging connector 114 of the charging cable 113 is connected to the charging port 39 during charging, if the control device 46 is started when the second start switch 64 is turned on, the control device 46 turns on the battery start relay 122 and starts the battery control device 90a. As a result, the battery control device 90a can communicate with the charger 115, and charging of the battery 90 from the external charging facility is started when the predetermined condition is satisfied.

It may be so configured that the battery-malfunction response relay 120 and the battery start relay 122 are included in a single relay unit, and the relay unit is fixed to a rear side surface of a second plate 88 made of metal that divides a space in the bonnet, which will be described later, together with the control device 46. This allows the relay unit to dissipate heat more easily, whereby a temperature rise of the relay unit can be suppressed.

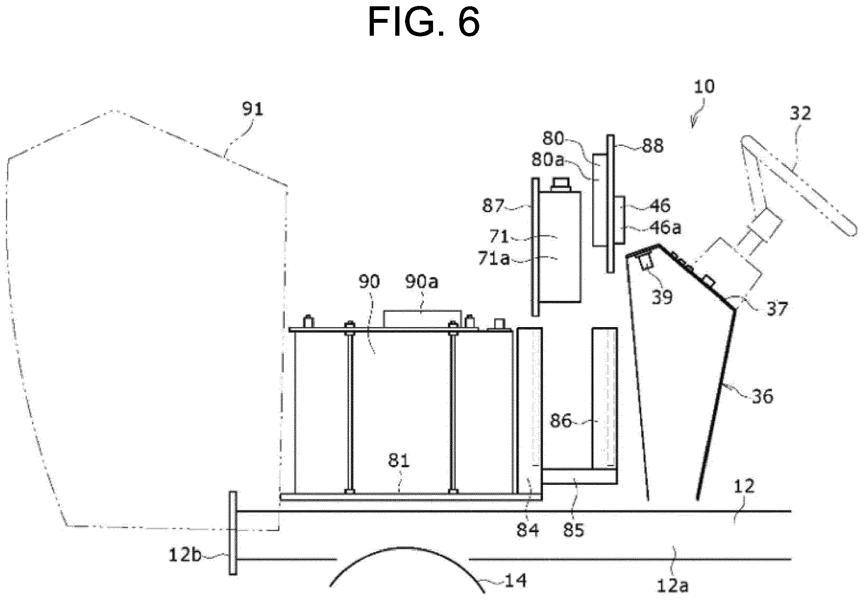

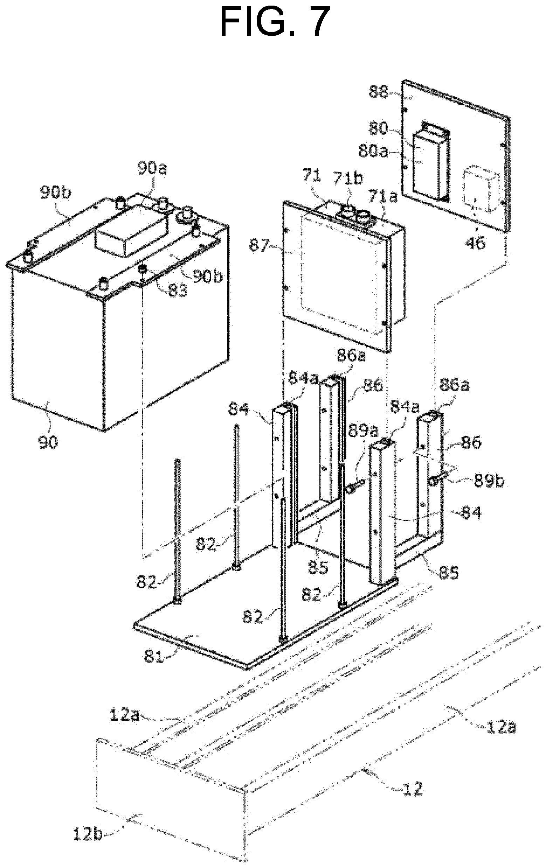

Subsequently, a disposition structure of each of the battery 90, the junction box 71, and the inverters 42 and 44 in the vehicle 10 will be explained by using FIGs. 6 to 8. FIG. 6 is a diagram corresponding to a front part of FIG. 1 illustrating a state where the bonnet 91 is opened, and the junction box 71 and the DC-DC converter 80 are taken out. FIG. 7 is a perspective view illustrating a state immediately before a battery mount 81, the battery 90, the junction box 71, and the DC-DC converter 80 are mounted on the front part of the vehicle-body frame 12 of the vehicle.

First, with reference to FIG. 1, the battery 90 is provided on the front side of the steering column 36 and disposed from the front side of the space inside the bonnet covered by the bonnet 91 to an intermediate part in the front-back direction. Specifically, the bonnet 91 is constituted by two side plate portions, left and right, a top plate portion connecting the upper ends of the two side plate portions, and a front plate portion that closes an opening formed by the top plate portion and the front ends of the two side plate portions. A lower end part on the front side of the bonnet 91 is mounted capable of swing along an axis in the left-right direction with respect to the front end part of the vehicle-body frame 12. As a result, as shown in FIG. 6, in a state where the bonnet 91 is moved to stand on the front side, the space having been covered by the bonnet 91 and the equipment or components such as the battery 90 disposed in that space can be opened to the outside.

The battery 90 is fixed to the vehicle-body frame 12 via the battery mount 81. Specifically, with reference to FIG. 2, a rectangular flat-plate shaped battery mount 81 is fixed to upper sides of the both side frames 12a, extending across the both side frames 12a. As shown in FIG. 7, two shaft portions 82 in which threaded portions are formed at least on upper end portions are fixed separately in front and back by penetrating the battery mount 81 from below to above and standing upright on the upper side on each of the both left and right end portions of the battery mount 81. A mounting plate 90b extending in the front-back direction and protruding outward in a lateral direction is fixed to the both left and right end portions of the upper end of the battery 90. The battery 90 is disposed on the upper surface of the battery mount 81 so that the shaft portion 82 penetrates from below through holes formed in front and back of each of the mounting plates 90b. In this state, the battery 90 is fixed to the battery mount 81 by a nut 83 fixed to the threaded portion on the upper end of the shaft portion 82. FIG. 7 shows only the nut 83 coupled with the one shaft portion 82, but the same applies to the nuts coupled with the other shaft portions 82.

In addition, a pair of first columns 84 are fixed to end parts on the rear side in the both left and right end parts of the battery mount 81 so as to stand upright, and a second column 86 standing upright is fixed via a connecting portion 85 extending in the front-back direction on a lower end part of the rear surface of each of the first columns 84. As a result, the pair of first columns 84 and the pair of second columns 86 are fixed to the rear side of the battery mount 81. Moreover, the two first columns 84 are fixed on the upper side of the vehicle-body frame 12, separated from each other to left and right. The two second columns 86 are fixed on the upper side of the vehicle-body frame 12 on the rear side of the two first columns 84, separated from each other to left and right.

In this example, the second column 86 and the connecting portion 85 are formed of a single member substantially having an L-shape as a whole. On the other hand, the second column and the connecting portion may be formed of separate members and may have substantially an L-shape as a whole by being fixed integrally by fastener such as bolts and nuts.

Each of the first columns 84 is made of metal such as steel, and it has a first groove 84a having a rectangular section and opened toward a center in the left-right direction formed along an entire length in the up-down direction in an inner side surface directed to a center in the left-right direction thereof. A width of the first groove 84a corresponds to a thickness of the first plate 87. Each of the first columns 84 is provided at the same position with respect to the front-back direction, and the first groove 84a of each of the first columns 84 is also provided at the same position with respect to the front-back direction.

Each of the second columns 86 is made of metal such as steel, and it has a second groove 86a formed along an entire length in the up-down direction in an inner side surface directed to a center in the left-right direction thereof, similarly to the first column. A width of the second groove 86a corresponds to a thickness of the second plate 88. Each of the second columns 86 is provided at the same position with respect to the front-back direction, and the second groove 86a of each of the second columns 86 is also provided at the same position with respect to the front-back direction.

Both left and right ends of the first plate 87 are inserted into the first groove 84a of each of the first columns 84. The first plate 87 has a flat plate shape, for example. In this state, bolts 89a which penetrate holes in the front-back direction at a plurality of positions in the up-down direction of the first column 84 also penetrate holes formed in both left and right ends of the first plate 87 in the first groove 84a. The both left and right ends of the first plate 87 are fixed to each of the first columns 84 by nuts (not shown) fixed to distal ends of the bolts 89a which penetrate the first column 84. In FIG. 7, only the bolt 89a penetrating one hole in one first column 84 is shown, but the same applies to the bolts penetrating the other first columns 84 or other holes.

As a result, the first plate 87 is disposed on the rear side of the battery 90 in the space inside the bonnet, divides a part of the space inside the bonnet into front and rear, and stands upright in space inside the bonnet. The first plate 87 is formed of metal such as iron, an aluminum alloy and the like.

The battery 90 is disposed on the front of the front side surface of the first plate 87, and the junction box 71 is attached to the rear side surface of the first plate 87 by being fixed thereto. The junction box 71 accommodates electrical components such as the main contactor 112, busbars, and fuses 116 in a box-like case 71a formed of metal such as iron, an aluminum alloy and the like. Moreover, on an upper end of the case 71a, a connector 71b for connecting wiring to electrical components in the case 71a from outside is provided. Instead of the connector 71b, wiring can be connected to the electric components inside through an opening formed in an upper end of the case 71a. The case 71a is disposed vertically in the space inside the bonnet so that a length in the front-back direction becomes smaller than a length in the up-down direction and a length in the left-right direction. Heat generated from the various electrical components is dissipated from the case 71a and the first plate 87.

Both left and right ends of the second plate 88 are inserted into the second groove 86a of each of the second columns 86. The second plate 88 has a flat plate shape, for example. In this state, bolts 89b which penetrate holes in the front-back direction at a plurality of positions in the up-down direction of the second column 86 also penetrate holes formed in both left and right ends of the second plate 88 in the second groove 86a. The both left and right ends of the second plate 88 are fixed to each of the second columns 86 by nuts (not shown) fixed to distal ends of the bolts 89b which penetrate the second columns 86. In FIG. 7, only the bolt 89b penetrating one hole in one second column 86 is shown, but the same applies to the bolts penetrating the other second columns 86 or other holes.

As a result, the second plate 88 divides a part of the space inside the bonnet on the rear side of the first plate 87 in the space inside the bonnet into front and rear and stands upright in the space inside the bonnet. The second plate 88 is also formed of metal similarly to the first plate 87.

The DC-DC converter 80 is attached to the front side surface of the second plate 88. The DC-DC converter 80 has a converter circuit accommodated in a case 80a. The case 80a has a box shape and is formed of metal such as iron, an aluminum alloy and the like. In the case 80a, connectors or openings for connecting wiring are formed similarly to the junction box 71. The control device 46 and heat sinks (not shown) of the DC-DC converter 80 are brought into close contact with an outer surface of the second plate 88.

The control device 46 is attached to the rear side surface of the second plate 88. The control device 46 accommodates a control circuit in a case 46a. The case 46a also has a box shape formed of metal similarly to the case 80a. In the case 46a, connectors or openings for connecting wiring are formed similarly to the DC-DC converter 80 and the junction box 71.

When a maintenance work such as inspection of the junction box 71 and at least either one of the DC-DC converter 80 and the control device 46 is to be performed, as shown in FIG. 6, an operator moves the bonnet 91 to the front side and opens the inside of the bonnet 91. In this state, by removing the bolts and nuts which fix each of the first columns 84 as well as the first plate 87 and the second columns 86 and the second plate 88, and by pulling out each of the plates 87, 88 upward from each of the columns 84, 86, the junction box 71, the DC-DC converter 80, and the control device 46 can be removed from the vehicle. As a result, the maintenance work can be performed efficiently in a large area with favorable workability. The first plate and the second plate do not have to be configured to be inserted into grooves along the up-down direction of the columns. Even in this case, in a state where the inside of the bonnet 91 is open, the junction box 71, the DC-DC converter 80, and the control device 46 are disposed on the upper side from the lower end of the battery 90 and thus, the maintenance work can be made easier than a case where a target component for the maintenance is disposed on the lower side of the battery 90.

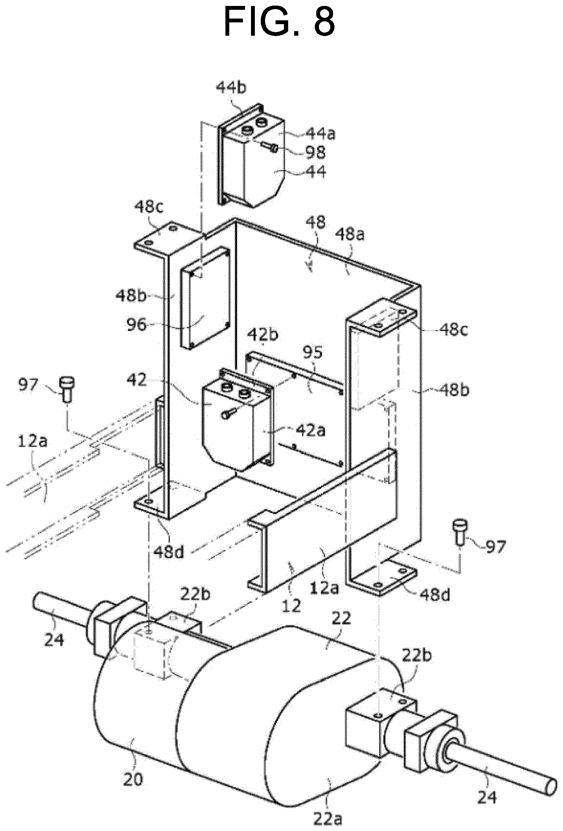

FIG. 8 is a perspective view illustrating a state immediately before the inverter mounting member 48 and the inverters 42, 44 are mounted on the upper side of the power transmission unit 22. With reference to FIGs. 1, 3, and 8, in this example, the traveling inverter 42 is disposed below the driver's seat 51, in addition to the traveling motor 20 and the power transmission unit 22. Specifically, the inverter mounting member 48 is stood upright on the upper surface of the power transmission unit 22. The inverter mounting member 48 has a main-body plate portion 48a which extends in the left-right direction and in the up-down direction and has a thickness direction facing the front-back direction and two side plate portions 48b which extend from the left and right end parts of the main-body plate portion 48a to the front side in the front-back direction. On the upper end part and the lower end part of each of the side plate portions 48b, an upper flange 48c and a lower flange 48d extending outward in the left-right direction are formed.

The inverter mounting member 48 is fixed to the rear end parts of the two side frames 12a, left and right, on the vehicle-body frame 12 so as to be sandwiched in the left-right direction. As a result, the inverter mounting member 48 serves as a strength member as the rear end part of the vehicle-body frame 12 and also functions as a suspension member for the power transmission unit 22 in the vehicle-body frame 12.

The lower flange 48d of the inverter mounting member 48 is fixed by screw connection using a screw 97 to the upper end of a mounting plate 22b having a substantially rectangular cylindrical shape provided on both left and right end parts of the unit case 22a of the power transmission unit 22. The upper flange 48c of the inverter mounting member 48 is fixed by the screw connection to the support member 52 with the driver's seat 51 provided on the upper side. As a result, the driver's seat 51 is fixed indirectly to the upper end part of the inverter mounting member 48 via the support member 52. The driver's seat 51 may be fixed directly to the upper end part of the inverter mounting member 48.

The traveling inverter 42 accommodates the traveling inverter circuit and the traveling-inverter control device in a the first case 42a. The deck inverter 44 accommodates the deck inverter circuit and the deck-inverter control device in a second case 44a. At least either one of the inverters, that is, the traveling inverter 42 and the deck inverter 44, is mounted on the front side surface of the main-body plate portion 48a of the inverter mounting member 48. Moreover, either one of the traveling inverter 42 and the deck inverter 44 is mounted on the front side surface of the main-body plate portion 48a, and the other is mounted on the inner side surface of the side plate portion 48b. At this time, heat sinks 95, 96 made of metal with high heat dissipation characteristics such as an aluminum alloy are interposed between each of the traveling inverter 42 and the deck inverter 44 and the inverter mounting member 48. The heat sinks 95, 96 are brought into contact with heat sinks 42b, 44b provided on each of the traveling inverter 42 and the deck inverter 44. The heat sinks 95, 96 are fixed to the inverter mounting member 48, and the heat sinks 95, 96 and the heat sinks 42b, 44b are fixed by screw connection using screws. As a result, the traveling inverter 42 and the deck inverter 44 are disposed below the driver's seat 51. Wind flowing from the front to the rear of the vehicle during traveling is sent into the space enclosed by the inverter mounting member 48 and thus, heat dissipation from the inverter mounting member 48 is promoted. An opening for air ventilation may be provided in the main-body plate portion 48a as appropriate.

In FIG. 3, the two inverters 42 and 44 are fixed to the lower side of the main-body plate portion 48a of the inverter mounting member 48, and the deck inverter 44 is fixed one by one to each of the side plate portions 48b of the inverter mounting member 48. On the other hand, not limited to this configuration, the disposition positions of the inverters 42, 44 relative to the inverter mounting member 48 can be changed in accordance with disposition relationship or the like of components around the inverter mounting member 48. For example, the four inverters 42, 44 may be fixed only to an inner side surface of the main-body plate portion 48a. In FIG. 8, some of the inverters are not shown.

In the above, the case in which the rear wheels 16 are driven by the traveling motor 20 was described, but it may be such a configuration that the front wheels are driven by the traveling motor 20 or that both the front wheels and the rear wheels are driven by the traveling motor 20.

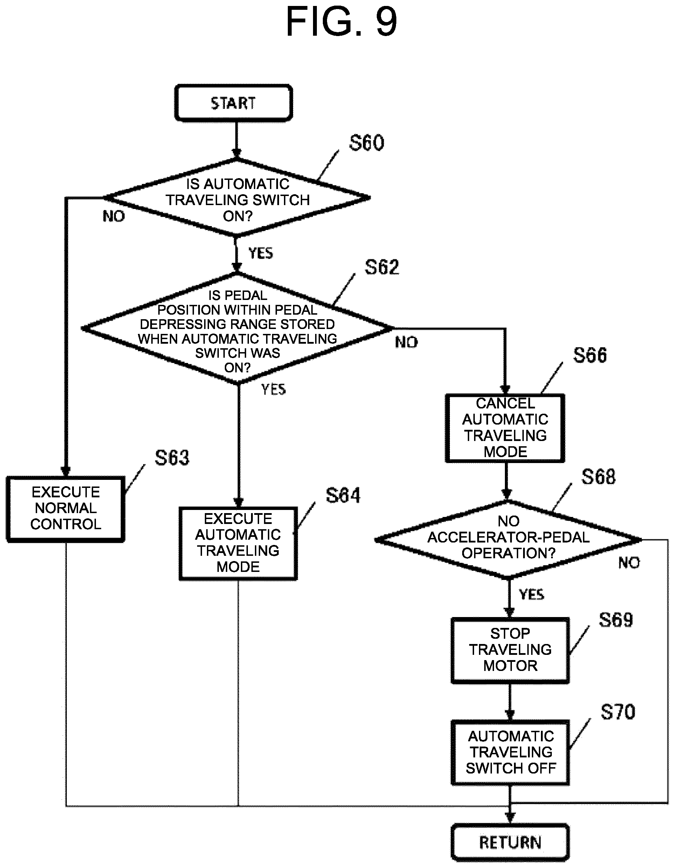

FIG. 9 is a flowchart illustrating the travel control method when the driver turns on the cruise switch 65 (FIG. 4) in the control system of the embodiment. In the configuration of this example, the control device 46 executes the cruise mode when the cruise switch 65 is turned on and the predetermined condition is satisfied. Moreover, the control device 46 cancels the cruise mode when the cruise switch 65 is turned on but the predetermined condition is not satisfied, and when it is determined that the accelerator pedal 54 (FIG. 10) is not operated after the cancellation of the cruise mode, it drives the traveling motor 20 in a direction in which a reverse torque is applied via the traveling inverter 42 and stops its rotation. As a result, as will be described later, the vehicle can be shifted more quickly to the operation that reflects the driver's intention when the cruise switch 65 is turned on. Moreover, the accelerator pedal 54 is urged to automatically return to the position at which the vehicle speed is set to zero when it is not operated (hereinafter, referred to as a "zero value").

The travel control method in a case where the cruise switch 65 is turned on will be explained by using FIG. 9. First, at S60, the control device 46 determines whether the cruise switch 65 is turned on. If the determination result at S60 is affirmative (YES), it is determined at S62 whether the operation position of the accelerator pedal 54 is within a range from the zero value to a pedal depression position stored at the time of the ON operation of the cruise switch 65. At this time, the "predetermined condition" for executing the cruise mode is that the operation position of the accelerator pedal 54 is within the range from the zero value to the pedal depression position stored at the time of the ON operation of the cruise switch 65. An illumination-type push-button switch is used for the cruise switch 65, and when it is in the ON state, the control device 46 causes a switch push-surface to be lighted to indicate that it is in the cruise mode.

On the other hand, if the determination result at S60 is negative (NO), at S63, normal travel control is executed in accordance with the operation position of the accelerator pedal 54 by the driver who does not perform the cruise.

If the determination result at S62 is affirmative (YES), the predetermined condition is satisfied and the cruise mode is executed at S64. As a result, the vehicle speed set at the position of the accelerator pedal 54 when the cruise switch 65 is turned on is stored, and the rotation speed of the traveling motor 20 is controlled so that the vehicle traveling at that vehicle speed is maintained without the operation of the accelerator pedal 54. At this time, since the driver has released the driver's foot from the accelerator pedal 54, the accelerator pedal 54 returns to the zero value (depression degree is 0%).

On the other hand, if the determination result at S62 is negative (NO), the predetermined condition is not satisfied and thus, the cruise mode is canceled at S66, and the processing proceeds to S68. At S68, it is determined whether there is an operation of the accelerator pedal 54 or not. If the determination result at S68 is affirmative (YES), the traveling motor is controlled to stop at S69, and the cruise switch 65 is turned off at S70. On the other hand, if the determination result at S68 is negative (NO), and after processing at S63 and S64, the processing returns to S60 and the processing is repeated. S70 is provided when the cruise switch 65 is a relay type. If the cruise switch 65 is a momentary-type push button switch which is ON only while the button is pressed, S70 is omitted, and it is only necessary to determine whether the ON operation of the cruise switch 65 has been performed at S60.

FIG. 10 illustrates an example of a relationship between the traveling state of the vehicle 10 and the operation ratio corresponding to the operation position of the accelerator pedal 54 when the vehicle is caused to travel by turning on the cruise switch 65 (FIG. 4) on the basis of the flowchart in FIG. 9. First, in a state A1, the vehicle is traveling in the cruise mode. Here, at the ON operation of the cruise switch 65, if a pedal depression degree, which is the operation ratio of the accelerator pedal 54 corresponding to the pedal position, is 50%, the control device 46 stores 50%. In the state A1, the driver's pedal depression degree is 0%, but the control device 46 uses the stored pedal depression degree 50% to travel the vehicle 10 so as to maintain at 5 km/h. Thus, the predetermined condition for executing the cruise mode is satisfied. Subsequently, in a state A2, the driver's pedal depression degree is 55%, and the accelerator pedal 54 is operated beyond the pedal position stored at the start of the cruise mode. At this time, the predetermined condition is not satisfied, and the cruise mode is canceled at the timing when the pedal position exceeds the pedal depression degree of 50%. Here, in order to prevent erroneous determination by the control device 46, the degree of depression of the stored value plus 5% is used as a determination value for mode cancellation. At the pedal depression degree less than the stored value plus 5%, the vehicle speed corresponding to the stored value (vehicle speed 5 km/h) is maintained.

Subsequently, in a state A3, the driver further depresses the accelerator pedal 54, and the pedal depression degree is 60%. At this time, since the determination value is exceeded, the cruise mode is canceled, the speed of the vehicle 10 is adjusted in accordance with the pedal depression degree, and the vehicle 10 accelerates to 6 km/h.

Subsequently, in a state A4, the driver releases the driver's foot from the accelerator pedal 54, and the pedal depression degree becomes 0%. At this time, since the accelerator pedal 54 is not operated, the traveling motor is stopped by the control device 46, and the vehicle 10 stops.

According to the control system described above, when the cruise switch 65 is turned on but the predetermined condition is not satisfied, the cruise mode is canceled, and if it is determined that there is no operation of the accelerator pedal 54 after the cancellation of the cruise mode (S68 in FIG. 9, in a case of the state A4 in FIG. 10), rotation of the traveling motor is stopped. As a result, if the driver sets the accelerator pedal 54 to the zero value, the traveling motor 20 can be stopped without the need to depress the brake pedal. Thus, when the cruise switch 65 is turned on, the driver can stop the vehicle 10 more quickly when necessary. Therefore, the vehicle 10 can be shifted more quickly to the operation that reflects the driver's intention when the cruise switch 65 is turned on.

If the accelerator pedal 54 is urged so as to automatically return to the zero value when it is not operated, the driver can stop the vehicle 10 more quickly when necessary by simply releasing the driver's foot from the accelerator pedal 54.

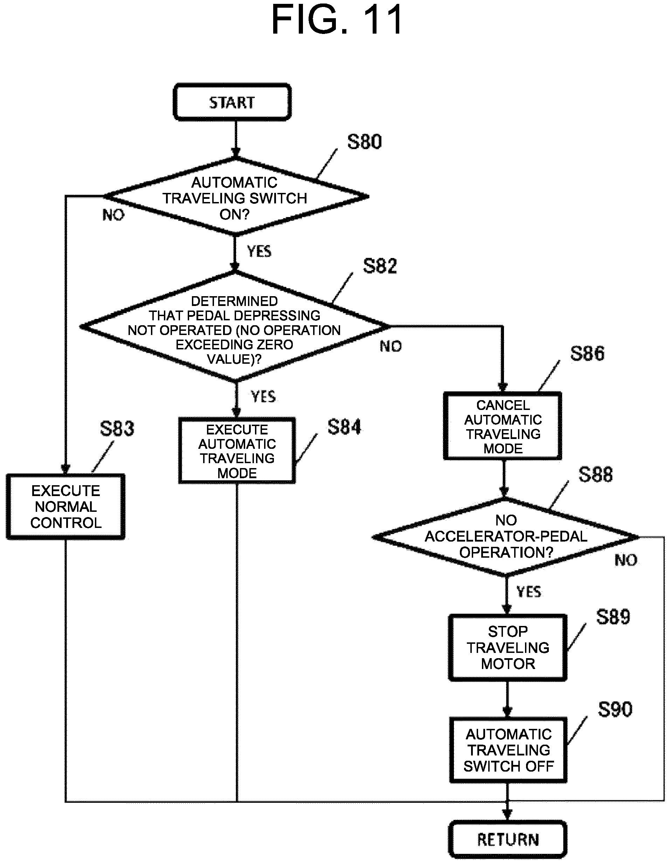

FIG. 11 is a flowchart illustrating the travel control method when the cruise switch 65 (FIG. 4) is turned on in the control system of another example of the embodiment. In the configuration of this example, if it is determined that the cruise switch 65 is turned on, and there is no operation of the accelerator pedal 54, the control device 46 executes the cruise mode, while if it is determined that the cruise switch 65 is turned on but there is an operation of the accelerator pedal 54 exceeding the zero value, the control device 46 cancels the cruise mode. This also allows the vehicle to shift more quickly to the operation that reflects the driver's intention, when the cruise switch 65 is turned on, as will be described below. Moreover, it may be so configured that the accelerator pedal 54 is urged to automatically return to the position at which the vehicle speed is set to zero, when it is not operated similarly to the case of the configuration in FIG. 9.

The travel control method in a case where the cruise switch 65 is turned on will be explained by using FIG. 11. First, at S80, it is determined by the control device 46 whether the cruise switch 65 is turned on. If the determination result at S80 is affirmative (YES), it is determined at S82 whether there is no depression operation of the accelerator pedal 54, that is, whether there is no operation of the accelerator pedal 54 exceeding the zero value. At this time, the "predetermined condition" for executing the cruise mode is that there is no operation of the accelerator pedal 54 exceeding the zero value.

On the other hand, if the determination result at S80 is negative (NO), at S83, normal travel control is executed in accordance with the operation position of the accelerator pedal 54 without performing the cruise.

If the determination result at S82 is affirmative (YES), the predetermined condition is satisfied and the cruise mode is executed at S84. The processing at S84 is similar to the processing at S64 in FIG. 9.

On the other hand, if the determination result at S82 is negative (NO), the predetermined condition is not satisfied and thus, the cruise mode is canceled at S86, and the processing at S88 to S90 is executed. The processing at S88 to S90 is similar to the processing at S68 to S70 in FIG. 9.

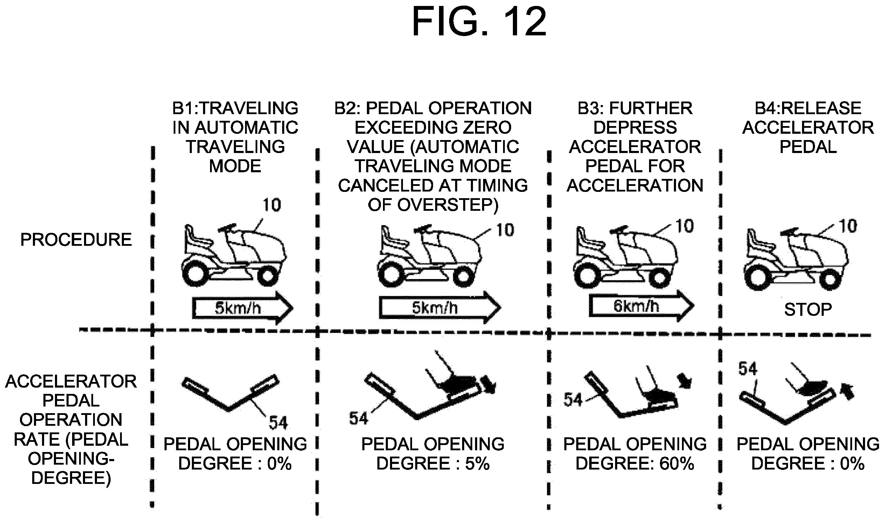

FIG. 12 illustrates an example of a relationship between the traveling state of the vehicle 10 and the operation ratio corresponding to the operation position of the accelerator pedal 54 when the vehicle 10 is caused to travel by turning on the cruise switch 65 (FIG. 4) on the basis of the flowchart in FIG. 11. First, in a state B 1, the vehicle is traveling in the cruise mode. In the state B 1, the driver's pedal depression degree is 0%, but the control device 46 maintains the vehicle speed at 5 km/h by using the stored pedal depression of 50%. Therefore, the predetermined condition for executing the cruise mode, that is, no operation of the accelerator pedal 54 exceeding the zero value, is satisfied. The zero value is a determination value that includes a play range (dead zone) and is set here at 0 to 5% of the depression degree. Subsequently, in the state B2, the driver's pedal depression degree is 5% but the vehicle speed maintains 5 km/h. When there is an operation in which the depression degree of the accelerator pedal 54 exceeds 5%, the predetermined condition is not satisfied and the cruise mode is canceled.

Subsequently, in a state B3, the driver further depresses the accelerator pedal 54, and the pedal depression degree is 60%. At this time, since the cruise mode has been canceled, the control device 46 performs speed adjustment of the traveling motor 20 so as to correspond to the pedal depression degree, and the vehicle 10 is traveling at 6 km/h.

Subsequently, in a state B4, the driver brings the accelerator pedal 54 to the zero value, and the pedal depression degree becomes 0%. At this time, since the accelerator pedal 54 is not operated, the traveling motor 20 is stopped, and the vehicle 10 stops.

According to the control system described above, when the cruise switch 65 is turned on, if it is determined that there is an operation of the accelerator pedal 54 exceeding the zero value, the cruise mode is canceled. As a result, the vehicle 10 can be shifted more quickly to an operation that the driver adjusts the vehicle speed in accordance with the driver's operation when necessary. Therefore, the vehicle 10 can be shifted more quickly to the operation that reflects the driver's intention when the cruise switch 65 is turned on.

If the accelerator pedal 54 is urged so as to automatically return to the zero value when it is not operated, the vehicle 10 can be shifted more quickly to the operation that the driver adjusts the vehicle speed in accordance with the driver's operation when necessary. The other configurations and actions of this example are the same as the configurations in FIGS. 1 to 10. In the present invention, the "predetermined conditions" for executing the cruise mode are not limited to the condition of each of the above embodiments, but can be various conditions.

### REFERENCE SIGNS LIST

10 Electric work vehicle (vehicle)
12 Vehicle-body frame
14 Front wheel
16 Rear wheel
18 Lawn mowing device (work implement)
19 Mower deck
20 Traveling motor
22 Power transmission unit
24 Axle
26 Deck motor (working motor)
32 Steering handle
34 Steering shaft
36 Steering column
37 Steering panel
38 Upper-end plate portion
39 Charging port
42 Traveling inverter
44 Deck inverter
46 Control device (ECU)
48 Inverter mounting member
51 Driver's seat
52 Support member
54 Accelerator pedal (travel instruction tool)
60 Accelerator pedal sensor
62 Operation switch group
63 First start switch
64 Second start switch
65 Cruise switch
66 Working start switch
67 Emergency stop switch
68 Load vehicle-speed control switch
69 Working speed select switch
70 Backward-work permission switch
71 Junction box
72 Indicator
73 Remaining-charge display portion
74 Cumulative start-time display portion
75 Lamp
76 Brake pedal sensor
77 Seat sensor
80 DC-DC converter
81 Battery mount
82 Shaft portion
83 Nut
84 First column
85 Connecting portion
86 Second column
87 First plate
88 Second plate
89a, 89b Bolt
90 Battery
91 Bonnet
95, 96 Heat sink
97, 98 Screw
100 Control portion
110 Control system
112 Main contactor
113 Charging cable
114 Charging connector
115 Charger
116 Fuse
118 Sub contactor
120 Battery-malfunction response relay
122 Battery start relay

## Claims

1. A control system for an electric work vehicle, comprising:
wheels driven by a traveling motor;
a travel instruction tool operated to set a vehicle speed of the vehicle from zero to a predetermined value;
a travel instruction sensor that detects an operation position of the travel instruction tool;
a control device that controls a rotation speed of the traveling motor on the basis of the operation position of the travel instruction tool; and
a cruise switch that instructs execution of an automatic traveling mode in which the rotation speed of the traveling motor is controlled by an ON operation such that the set vehicle speed is stored and that the traveling is maintained without an operation of the travel instruction tool, wherein
when the cruise switch is turned on and a predetermined condition is satisfied, the control device executes the cruise mode, while, when the cruise switch is turned on but the predetermined condition is not satisfied, the control device cancels the cruise mode, and if it is determined that there is no operation of the travel instruction tool after the cancellation of the cruise mode, the rotation speed of the traveling motor is stopped.

2. The control system for an electric work vehicle according to claim 1, wherein
the travel instruction tool is urged to automatically return to a position at which the vehicle speed is set to zero when it is not operated.

3. A control system for an electric work vehicle, comprising:
wheels driven by a traveling motor;
a travel instruction tool operated to set a vehicle speed of the vehicle from zero to a predetermined value;
a travel instruction sensor that detects an operation position of the travel instruction tool;
a control device that controls a rotation speed of the traveling motor on the basis of the operation position of the travel instruction tool; and
a cruise switch that instructs execution of a cruise mode in which the rotation speed of the traveling motor is controlled by an ON operation such that the set vehicle speed is stored and that traveling is maintained without an operation of the travel instruction tool, wherein
if it is determined that the cruise switch is turned on and there is no operation of the travel instruction tool, the control device executes the cruise mode, while if it is determined that the cruise switch is turned on but there is an operation of the travel instruction tool exceeding a zero value, the control device cancels the cruise mode.

4. The control system for an electric work vehicle according to claim 3, wherein
the travel instruction tool is urged to automatically return to a position at which the vehicle speed is set to zero when not being operated.

5. The control system for an electric work vehicle according to claim 3, wherein
after cancellation of the cruise mode, if it is determined that there is no operation of the travel instruction tool, the rotation speed of the traveling motor is stopped.
